(19) Europäisches Patentamt

European Patent Office

Office européen des brevets

(11) Publication number: **0 497 276 B1**

## EUROPEAN PATENT SPECIFICATION

(45) Date of publication of patent specification: **06.09.95**　(51) Int. Cl.⁶: $C04B\ 28/02$, $C09J\ 157/00$

(21) Application number: **92101352.0**

(22) Date of filing: **28.01.92**

(54) Improved adhesive composition and structures manufactured using such adhesive.

(30) Priority: **29.01.91 US 647295**

(43) Date of publication of application:
**05.08.92 Bulletin  92/32**

(45) Publication of the grant of the patent:
**06.09.95 Bulletin  95/36**

(84) Designated Contracting States:
**AT BE CH DE DK ES FR GB GR IT LI LU NL PT SE**

(56) References cited:
**DE-A- 2 820 389**
**GB-A- 899 962**
**GB-A- 2 000 490**
**GB-A- 2 085 022**

**WORLD PATENTS INDEX LATEST Week 8435, Derwent Publications Ltd., London, GB; AN 84-215830 & JP-A-59 124 976, 19 July 1984**

**CHEMICAL ABSTRACTS, vol. 108, no. 14, Columbus, Ohio, US; abstract no.117849Y & CN-A-85 106 610**

(73) Proprietor: **Schaaf, Cecil F.**
**3015 Palmer Road**
**Standish,**
**Michigan 48658 (US)**

(72) Inventor: **Schaaf, Cecil F.**
**3015 Palmer Road**
**Standish,**
**Michigan 48658 (US)**

(74) Representative: **Spott, Gottfried, Dr.**
**Spott, Weinmiller & Partner**
**Sendlinger-Tor-Platz 11**
**D-80336 München (DE)**

**Description**

This invention deals with an improved adhesive additive, adhesion compositions, articles, and structures manufactured utilizing such adhesive compositions.

More specifically, this invention deals with an adhesive additive, the adhesive additive formulated into an adhesive composition and the use of the adhesive composition that when used in conjunction with uncured cement, gives bonded structures that are unobtainable by just the use of the cement by itself.

*FIELD OF THE INVENTION*

Concrete is one of the most widely used building materials of all time and its use has increased at a rapid rate in recent years. As is well known, concrete is commonly made by mixing cement with sand, and sometimes aggregate, and water, to form a slurried curable mixture, and then the cement is allowed to cure to form a solid concrete substrate.

The curing of the concrete is a complex process involving the decomposition of certain substances in the concrete and the formation of certain other materials.

Wood is probably the material that is normally substituted for concrete in the building industry where it is adaptable to the construction, and most frequently, it is a combination of concrete, steel, brick and wood that forms the majority of the structures built in the United States today.

The United States has no shortage of building materials and thus the choices of materials for buildings generally follows the design and aesthetic features of the building without much thought given as to the availability of the building materials, their cost, and the ability to move the materials to the building site.

However, in countries foreign to the United States, there are major problems associated with the building of buildings such as the unavailability of concrete, wood and other construction materials, the cost of such materials, the ability of moving such materials to the building site, and so forth. For example, in England, where lumber is rather scarce, the buildings are built mostly of brick, stone and concrete. In Mexico, where there is a shortage of both concrete and wood, the houses are built out of the local stone, and for the poorer families, they are usually built out of stone and covered with adobe.

Further, in most third world countries, there is no permanent housing available at all as the residents cannot afford to buy the necessary building materials. In such countries, the national governments have tried to finance and build housing but it tends to be very costly owing to the scarcity of building materials.

What is needed therefore is affordable housing. This affordable housing can come about by providing economical building materials that are easily transportable and easily constructed on site.

To date, there has not been economical building materials, because of the fact that economical building materials such as concrete require costly construction techniques in order to ensure that the housing is safe and will withstand storms and heat and the like, while construction from wood materials ensures delays and long construction terms as it requires many man hours of labor.

However, if one had a unique means of constructing concrete housing that would ensure the required safety levels, and if one could expeditiously do this construction in an economical fashion, then housing could be provided for those needing it worldwide.

The instant invention provides a unique means of constructing concrete structures that ensures the required safety levels, in an expeditious manner and in an economical fashion.

The key to the uniqueness of the instant invention is a novel adhesive additive that can be added to cement to form an adhesive composition used as a means to provide bonding of preformed concrete substrates to various other solid substrates, and can be used with concrete to provide a means of manufacturing strong concrete articles, the details of which will be set forth below.

*THE PRIOR ART*

The adhesive additive of this invention is based on a combination of calcium chloride, adhesive latices and water, which combination is useful in admixture with cement to be used as a material for bonding solid substrates to other solid substrates; as a curable coating on solid substrates, and as a building material for manufacturing preformed, cured concrete products and as a cement-like product useful in the place of concrete.

It is believed by the applicant herein that no such materials have ever been disclosed to the public and that the adhesive additive and its combination with cement is new and novel.

The adhesive additive has as one of its components, calcium chloride. Calcium chloride is a known material for use in concrete as can be observed from the disclosure set forth in Penno, et al., U.S. patent 3,725,088, issued April 3, 1973 wherein calcium chloride and water are mixed with aluminum and copper compounds, and potassium hydroxide, to give compositions for waterproofing concrete and aggregate, and for improving the bonding and strength of aggregate.

Miller, in U.S. patent 1,791,630 discloses the use of calcium chloride in admixture with diatomaceous earth to alter the properties of concrete made from cement containing the same. The patent seems to be directed to the calcium chloride and how it is to be preserved and handled.

Catlett, in U.S. patent 1,282,188 discloses oxychlorides of calcium and Catlett attempts to improve the manufacture of the oxychlorides in U.S. patent 1,422,337, but nothing is indicated as to the efficiency of these materials in concrete mixtures.

The remaining patent reference found by the applicant is U.S. 1,547,713 in the name of Alles. This patent issued on July 28, 1925 and is directed to a hardening composition for lime which involves the use of calcium chloride as the hardening agent.

Finally, there is a reference made in Martens, C.R., "Waterborne Coatings: Emulsion and Water-Soluble Paints", Van Nostrand Reinhold Company NY, 1981, page 249, to the use of latices in portland cement compositions wherein the addition of synthetic latices to portland concrete produces a product with improved physical properties. Mentioned in the reference is the use of polyvinylacetate to give improved tensile and compressive strength in the dried and cured state.

However, none of the references deal with compositions which are mixtures of calcium chloride and adhesive latices or with the use of calcium chloride in conjunction with adhesive latices for use in concrete formulations and applications.

## THE INVENTION

The instant invention deals with an adhesive additive comprising calcium chloride, an adhesive latex and water, and its use in cement to form an adhesive composition having various uses. It is useful for bonding certain substrates to other substrates and it is especially useful for bonding concrete substrates to other solid substrates. This unique property allows the economical use of concrete for building articles and structures such that the building can be done expediously yet provide for the necessary safety factors in such structures.

Specifically, the instant invention deals with a composition of matter comprising: (A) 1 to 30 weight percent calcium chloride; (B) 1 to 20 weight percent adhesive latex, and (C) 50 to 98 weight percent water, all weights being based on the total weight of (A), (B), and (C) in the mixture.

It has been found by the inventor herein that an aqueous composition having as it's primary ingredients, calcium chloride and an adhesive latex, provides the beneficial properties to cement when the aqueous composition is added to the cement.

The calcium chloride useful in this invention does not have to be especially pure. It has been found that commercial, road grade, flake calcium chloride will suffice to give the effects desired in this invention. It is known that commercial calcium chloride is not pure, but contains some additional chemicals, such as sodium chloride, chromates, and the like. However, these materials do not seem to detract from the role played by the calcium chloride in this invention.

Another ingredient herein is the adhesive latex. These materials are commercially available, one such latex being Weldwood, manufactured by Dap Incorporated, and several products by Air Products, Inc., known as Vinac. These materials are generally poly(vinyl)acetate latices. These materials are milky liquids generally sold in squeeze bottles for easy use. They consist of a dispersion of polymer, fillers and plasticisers in water and are analogues of rubber latexes having a non-voltile content of about 45 to 65 weight percent. They keep very well in a sealed container. Their setting time is short for porous substrates such as paper and cardboard but longer for non-porous ones such as wood and ceramics. Some of these latices have acid hardners in them. The latices are prepared by known commercial procedures, some of which can be found in the text of Martens set forth above. Poly(vinyl)acetate is available as a solid polymer and it is contemplated within the scope of this invention to use the polyvinylacetate as a solid and form the dispersion in-situ for use in this invention.

The adhesive additives of this invention are easily prepared in that the calcium chloride and the adhesive latex are mixed together in the proper ratios and simply stirred. The desired amount of calcium chloride is first mixed with enough water to dissolve the calcium chloride and then additional water is added to get the final weight percent desired. The mixing of the calcium chloride and the water causes a small exotherm which is easily controlled. After the water and the calcium chloride are mixed and the dilution has taken place, there is added to the aqueous calcium chloride, the polyvinylacetate dispersion in the amount to give the adhesive additive of the instant invention. This addition sometimes results in a temporary, slight coagulation of the poly(vinyl)acetate, but upon continued mixing, the material smooths out into a uniform dispersion. This mix creates some foaming, however, common foam control additives can be used to assist the dispersion of the latex into the calcium chloride. The preparation can be assisted by shaking the mixing container rather than stirring the mixture. The mixture becomes uniform after only a few minutes of mixing. In some cases, depending on the mixture used, the foaming can be intense such that it appears to go through an inversion. Upon complete mixing however, the resulting mixture is uniform. In this form, the mixture is shelf stable for several months.

The components should be used within the ranges specified above to give the optimum results. The range for purposes of this invention for calcium chloride is about 1 to about 30. The preferred range for the calcium chloride is about 1 to 20 weight percent. The most preferred range is about 10 to 15 weight percent.

The range for the adhesive latex is 1 to 20 weight percent, the preferred range is about 3 to 15 weight percent. The remainder of the inventive composition is water which is generally present in the range of about 50 to 98 weight percent wherein all of the components of this composition are present based on the total weight of the composition of (A), (B), and (C).

Another segment of this invention is the adhesive composition that is provided by mixing the adhesive additive described just above with cement. This adhesive additive gives the cement unique properties, such that the cement becomes lighter in density, entrains more air, has greater compression, is less absorbant and is chemical resistant.

Thus, this invention also provides a composition of matter comprising: (I) a mixture of (A) calcium chloride; (B) adhesive latex; (C) water, admixed with (II) cement, wherein there is present 1 to 30 weight percent of component (A), 1 to 20 weight percent of component (B), 50 to 98 weight percent of component (C), all being based on the total weight of components (A), (B), and (C), and wherein the weight ratio of (II) to (I) is in the range of 1.5:1 to 3:1. When the materials are mixed in the ratio of 1.5 to 1, a sprayable material results and is very useful for coatings and the like. When the materials are mixed in a ratio of 2 to 1, the material is a heavy, viscous cream, and when the materials are mixed in a ratio of 3 to 1, the material is a stiff mortar, useful in those applications, among other applications, wherein lime mortar is currently used. The mixture of the adhesive composition and cement creates an exotherm and the adhesive composition at this point is curable. For purposes of this invention, "curable" is meant in the sense that the mixture will harden just like concrete. The adhesive composition must be used within about 2 hours or it will cure to an intractable solid. If during the use of the adhesive composition, it starts to become more viscous, it can be refurbished by adding small increments of water. Care should be taken not to add too much water as the effects of the viscous, thick material may be lost.

This adhesive composition can be used to bond various solid substrates together. This is accomplished by simply using the material as a glue between the two substrates and allowing the adhesive composition to cure. The application of the adhesion composition can be applied by brushing, troweling, dipping, pouring, spraying or the like, depending on the density. It has been surprisingly found that various types of substrates can be adhered together using this adhesive composition. For example, preformed, cured, concrete substrates can be adhered to each other. Also, concrete substrates and foamed plastic substrates can be adhered together, as well as concrete and wood, wood and wood, and wood and foamed plastic substrates.

Thus, composite materials can be prepared by the use of the adhesive composition of this invention.

It has also been discovered that concrete articles can be manufactured using the adhesive additive of this invention in the cement before the concrete article is formed and cured. What results is a concrete article having highly improved strengths. For example, concrete blocks manufactured by the use of the adhesion composition in the cement prior to forming the blocks and curing them, results in concrete blocks with higher compressive strengths.

When the adhesive composition is utilized in an application utilizing a mold and allowed to cure against a smooth mold, the result is an ultra smooth surface, very much like that of marble. In fact, the inventor herein has prepared various panels using the adhesive composition and limited pigments to give a smooth surface having the configuration and color of natural marble.

The inventor herein has also used the adhesive composition of this invention to make textured surfaces with almost any given color and design ingrained therein.

The adhesive composition of this invention when applied to a solid substrate and cured, provides an acid resistant surface, such that it is very useful in providing chemical resistant flooring in laboratories and the like.

It has also been found by the inventor herein that the adhesive composition of this invention can be used to adhere surfaces without clamping or other pressure that normally require clamping while the glues are setting.

With all of the desirable properties described supra, it is apparent that the adhesive composition can be used to provide articles that can be preformed and moved to a building site and then can be glued together, again using the adhesive composition, to provide structures at the site.

Thus, it is contemplated within the scope of this invention to provide for a method of bonding solid substrates together, the method comprising (I) applying an adhesive composition as disclosed herein to at least one surface of a first solid substrate to be bonded; (II) contacting the solid substrate treated in (I) with a second solid substrate such that the composition is sandwiched between the first solid substrate and the second solid substrate; (III) thereafter allowing the composition to harden, whereby bonded solid substrates are obtained. Such bonded solid substrates can be for example panels, such as wall panels, ceiling panels, floor panels, and roof panels; building materials such as floor, ceiling and roof joists; beams; support columns; and the like.

With the variety of articles that can be obtained in this manner, it is within the contemplation of the inventor herein to provide for the building of structures such as homes, commercial buildings, storage facilities and the like, by providing a combination of the articles described above and bonding them together using the adhesive composition of this invention to form such structures.

Thus, what is required at a building site can be all of the preformed articles required to erect a structure, and then by using the adhesive composition of the instant invention, bonding all of the articles together to form the structure.

This manner of construction is efficient, inexpensive, and provides an aesthetically pleasing structure which is durable for many years.

The examples provided below are intended to further illustrate and clarify the invention and they are not to be construed to limit the scope of the invention as it is set forth in this specification and claims.

Example 1

An attempt was made to determine if any other inorganic materials provided the benefits of calcium chloride as it is used within the scope of this invention. Thus, several inorganic materials were screened in an attempt to show that calcium chloride was unique in providing the benefits of the instant invention.

The inorganic materials were substituted for calcium chloride in the following formulation: 20 weight percent calcium chloride, 10 weight percent adhesive latex dispersion having about 60 weight percent solids polymer, and 70 weight percent water.

The inorganic material was first mixed into water, if soluble, and then the aqueous inorganic material was further diluted with water to give the 20 weight percent value and then the latex dispersion was mixed in. The following were the results.

| Inorganic Material | Appearance of the mix |
|---|---|
| Sodium Chloride | immediate coagulation and floating scum on the top |
| Sodium Bicarbonate | thickens, and polymer sinks to bottom |
| Sodium Carbonate | polymer coagulate and floats. Some solids sink to the bottom. |
| Potassium chloride | polymer coagulates and sinks |
| Calcium hydroxide | polymer separates quickly but can be put back into dispersion. unstable |
| Lithium hydroxide | will not mix at all |
| Calcium chloride | forms smooth dispersion and remains stable |

In order to be useful in the instant invention, the inorganic material must form a homogeneous blend with the latex. If it does not, then is it not useful in the instant invention, and it can be observed that only the calcium chloride formed a smooth dipsersion and remained stable.

Example 2

In this example, sets of two fully cured concrete bricks having the dimensions of 6.35 cms (2 1/2 inches) by 8.9 cms (3 1/2 inches) by 7 inches were glued at the 2 1/2 by 3 1/2 interfaces using a cement prepared as shown in the following table. Using the formulation of Example 1, the compressive and tensile strengths were measured and are reported in the table next.

| Concrete composition | Compressive Strength | Tensile Strength |
|---|---|---|
| concrete | ( ⁻ 1200 psi ) ∼ 8.1 MPa | ( ⁻ 30 psi ) ∼ 0.2 MPa |
| 70% concrete containing 30% of pva latex | ( ⁻ 1200 psi ) ∼ 8.1 MPa | ( ⁻ 30 psi ) ∼ 0.2 MPa |
| conventional mortar containing lime | ( 2500 psi ) ∼ 16.9 MPa | ( ⁻ 212 psi ) ∼ 1.43 MPa |
| * 37% water 50% concrete 3% of pva latex 10% of calcium chloride | ( ⁻ 9000 psi ) ∼ 60.8 MPa | ( ⁻ 535 psi ) ∼ 3.61 MPa |

* the invention. The first three cements are controls and are not considered within the scope of this invention.
⁻ indicates average from several repetitive test samples

Example 3

The adhesion composition has been found to retard the corrosion of steel when it is used in the reinforcement of concrete. This example shows the degree of reduction of such corrosion. Steel nails were soaked in 0.95 litres (one quart) of the varios solutions shown in the table below for a period of two months.

| Material | Observation at Two Months |
|---|---|
| 100 % water | Rust formed on the nails; especially the head of the nail |
| 10% calcium chloride 90% water | Rust formed on the nails; Rusty material covers the bottom of jar |
| 20% calcium chloride 74% water 6% latex | No rust formed on the nail; liquid has a rusty color. |

EP 0 497 276 B1

Example 4

The following samples were prepared to determine the optimum levels at which to use a combination of calcium chloride and poly(vinyl)acetate for the best results.

Into a 0.95 litres (quart) glass jar, the various amounts of the materials of the samples given below were added. After addition, the materials were shaken to homogenize them. If the materials do not homogenize after a short while, then they are considered not to be optimum for use in this invention. All percents are by weight. The results are reported in the table next.

| | % | Poly(vinyl) acetate 6% | Poly(vinyl) acetate 12% |
|---|---|---|---|
| C A L | 5 | mixed well | mixed well some bubbles |
| C I U M | 10 | mixed well | mixed well |
| C H L O | 15 | begins heat some bubbles some solids | begins heat some bubbles some solids |
| R I D E | 20 | coagulation begins globular foam | coagulation begins globular foam |
| | 25 | polymer becomes stringy, floats | polymer becomes stringy, floats |

**Claims**

1. A composition of matter comprising
   (A) 1 to 30 weight percent calcium chloride;
   (B) 1 to 20 weight percent adhesive latex, and
   (C) 50 to 98 weight percent water, all weights being based on the total weight of (A), (B), and (C) in the mixture.

2. A composition of matter as claimed in claim 1 wherein there is present 1 to 20 weight percent of component (A).

3. A composition of matter as claimed in claim 1 wherein there is present 6 to 15 weight percent of component (A).

4. A composition of matter as claimed in claim 1 wherein there is present 6 weight percent of component (B).

5. A composition of matter as claimed in claim 1 wherein there is present 12 weight percent of component (B).

7

6. A composition of matter as claimed in claim 1 wherein there is present 20 weight percent of component (A); 7 weight percent of component (B), and 73 weight percent of component (C), the weight of each component being based on the total weight of components (A), (B), and (C).

7. A composition of matter comprising
   (I) a mixture of
      (A) calcium chloride;
      (B) adhesive latex;
      (C) water, admixed with
   (II) cement,
   wherein there is present 1 to 30 weight percent of component (A), 1 to 20 weight percent of component (B), 50 to 98 weight percent of component (C), all being based on the total weight of components (A), (B), and (C), and wherein the weight ratio of (II) to (I) is in the range of 1.5:1 to 3:1.

8. A composition of matter as claimed in claim 7 wherein there is present 20 weight percent of component (A); 7 weight percent of component (B), and 73 weight percent of component (C), the weight of each component being based on the total weight of components (A), (B), and (C).

9. A method of forming solid structures, the method comprising
   (I) applying a composition as claimed in claim 7 to at least one surface of a first solid substrate;
   (II) contacting the solid substrate treated in (I) with an second solid substrate such that the composition is sandwiched between the first solid substrate and the second solid substrate.

10. A method of bonding solid substrates together, the method comprising
    (I) applying a composition as claimed in claim 7 to at least one surface of a first solid substrate to be bonded;
    (II) contacting the solid substrate treated in (I) with a second solid substrate such that the composition is sandwiched between the first solid substrate and the second solid substrate;
    (III) thereafter allowing the composition to harden, whereby bonded solid substrates are obtained.

11. Concrete mixture comprising cement, sand and optionally aggregate, wherein the cement is present as a composition according to claim 7.

12. Use of a composition of claim 7 for the preparation of a concrete article.

**Patentansprüche**

1. Zusammensetzung umfassend
   (A) 1 bis 30 Gew.-% Calciumchlorid;
   (B) 1 bis 20 Gew.-% Haftlatex und
   (C) 50 bis 98 Gew.-% Wasser,
   wobei sich alle Gewichtsangaben auf das Gesamtgewicht von (A), (B) und (C) in der Mischung beziehen.

2. Zusammensetzung nach Anspruch 1, worin 1 bis 20 Gew.-% Komponente (A) vorhanden sind.

3. Zusammensetzung nach Anspruch 1, worin 6 bis 15 Gew.-% Komponente (A) vorhanden sind.

4. Zusammensetzung nach Anspruch 1, worin 6 Gew.-% Komponente (B) vorhanden sind.

5. Zusammensetzung nach Anspruch 1, worin 12 Gew.-% Komponente (B) vorhanden sind.

6. Zusammensetzung nach Anspruch 1, worin 20 Gew.-% Komponente (A); 7 Gew.-% Komponente (B) und 73 Gew.-% Komponente (C) vorhanden sind, wobei das Gewicht jeder Komponente auf dem Gesamtgewicht der Komponenten (A), (B) und (C) basiert.

7. Zusammensetzung umfassend (I) eine Mischung aus (A) Calciumchlorid; (B) Haftlatex; (C) Wasser, vermischt mit (II) Zement, wobei 1 bis 30 Gew.-% Komponente (A), 1 bis 20 Gew.-% Komponente (B), 50 bis 98 Gew.-% Komponente (C) vorhanden sind, wobei alle Gewichtsangaben sich auf das Gesamtgewicht der Komponenten (A), (B) und (C) beziehen, und wobei das Gewichtsverhältnis von (II) zu (I) im Bereich von 1,5:1 bis 3:1 liegt.

8. Zusammensetzung nach Anspruch 7, worin 20 Gew.-% Komponente (A); 7 Gew.-% Komponente (B) und 73 Gew.-% Komponente (C) vorhanden sind, wobei sich die Gewichtsangabe jeder Komponente auf das Gesamtgewicht der Komponenten (A), (B) und (C) bezieht.

9. Verfahren zur Herstellung von festen Gebäuden, wobei das Verfahren umfaßt, daß man
(I) eine Zusammensetzung, wie in Anspruch 7 beansprucht, auf mindestens eine Oberfläche eines ersten festen Substrats aufträgt,
(II) das in Stufe (I) behandelte feste Substrat mit einem zweiten festen Substrat so in Kontakt bringt, daß die Zusammensetzung zwischen dem ersten festen Substrat und dem zweiten festen Substrat sandwichartig angeordnet wird.

10. Verfahren zur Verbindung von festen Substraten miteinander, wobei das Verfahren umfaßt, daß man
(I) eine Zusammensetzung nach Anspruch 7 auf mindestens eine Oberfläche eines ersten Substrats, das verbunden werden soll, aufträgt;
(II) das in Stufe (I) behandelte feste Substrat mit einem zweiten festen Substrat so in Kontakt bringt, daß die Zusammensetzung zwischen dem ersten festen Substrat und dem zweiten festen Substrat sandwichartig angeordnet wird;
(III) danach die Zusammensetzung härten läßt, wobei verbundene feste Substrate erhalten werden.

11. Betonmischung umfassend Zement, Sand und gegebenenfalls Zuschlagstoffe, wobei der Zement in Form einer Zusammensetzung nach Anspruch 7 vorhanden ist.

12. Verwendung einer Zusammensetzung nach Anspruch 7 zur Herstellung eines Betongegenstandes.

**Revendications**

1. Composition de matière comprenant
(A) 1 à 30 % en poids de chlorure de calcium;
(B) 1 à 20 % en poids de latex adhésif, et
(C) 50 à 98 % en poids d'eau, tous les poids étant basés sur le poids total de (A), (B) et (C) dans le mélange.

2. Composition de matière selon la revendication 1, où il existe 1 à 20 % en poids de composant (A).

3. Composition de matière selon la revendication 1, où il existe 6 à 15 % en poids de composant (A).

4. Composition de matière selon la revendication 1, où il existe 6 % en poids de composant (B).

5. Composition de matière selon la revendication 1, où il existe 12 % en poids de composant (B).

6. Composition de matière selon la revendication 1, où il existe 20 % en poids de composant (A); 7 % en poids de composant (B) et 70 % en poids de composant (C), le poids de chaque composant étant apporté au poids total de composants (A), (B) et (C).

7. Composition de matière comprenant
(I) un mélange de
(A) chlorure de calcium;
(B) latex adhésif;
(C) eau, mélangée avec
(II) du ciment,
où il existe 1 à 30 % en poids de composant (A), 1 à 20 % en poids de composant (B), 50 à 98 % en poids de composant (C), tous les pourcentages étant rapportés au poids total de composants (A), (B) et (C), et où la proportion pondérale de (II) à (I) est comprise dans l'intervalle de 1,5:1 à 3:1.

**8.** Composition de matière selon la revendication 7 où il existe 20 % en poids de composant (A); 7 % en poids de composant (B) et 73 % en poids de composant (C), le poids de chaque composant étant rapporté au poids total de composants (A), (B) et (C).

**9.** Procédé de formation de structures solides, le procédé comprenant :
(I) appliquer une composition selon la revendication 7 sur au moins une surface d'un premier substrat solide;
(II) mettre en contact le substrat solide traité en (I) avec un second substrat solide, de sorte que la composition est prise en sandwich entre le premier substrat solide et le second substrat solide.

**10.** Procédé de collage de substrats ensemble, le procédé comprenant;
(I) appliquer une composition selon la revendication 7 sur au moins une surface d'un premier substrat solide à coller;
(II) mettre en contact le substrat solide traité en (I) avec un second substrat solide, de sorte que la composition est prise en sandwich entre le premier substrat solide et le second substrat solide ;
(III) permettre ensuite à la composition de durcir, ce qui permet de lier les substrats solides.

**11.** Mélange de béton comprenant du ciment, du sable et éventuellement des agrégats, où le ciment est présent sous forme d'une composition selon la revendication 7.

**12.** Utilisation d'une composition selon la revendication 7, pour préparer une pièce en béton.